## Europäisches Patentamt

## European Patent Office

## Office européen des brevets

(19)

(11) Veröffentlichungsnummer: **0 088 358**
**A1**

(12) **EUROPÄISCHE PATENTANMELDUNG**

(21) Anmeldenummer: **83102048.2**

(22) Anmeldetag: **03.03.83**

(51) Int. Cl.³: **F 24 D 11/00, F 24 D 19/10**

(30) Priorität: **10.03.82 DE 3208566**

(43) Veröffentlichungstag der Anmeldung: **14.09.83**
**Patentblatt 83/37**

(84) Benannte Vertragsstaaten: **AT BE CH FR LI NL**

(71) Anmelder: **Chemowerk Bayern GmbH, Kappelweg 2,
D-8801 Schnelldorf (DE)**

(72) Erfinder: **Nixel, Fritz, Dipl.-Ing., Grimmschwinden 15,
D-8801 Schnelldorf (DE)**

(74) Vertreter: **Patentanwalt Dipl.-Phys. Dr. Manitz et al,
Patentanwälte Dipl.-Ing. Grämkow Dipl.-Phys. Dr. Manitz
Dipl.-Ing. Finsterwald Dipl.-Chem. Dr. Heyn Dipl.-Phys.
Rotermund B.Sc.(Phys.) Morgan Seelbergstrasse 23/25,
D-7000 Stuttgart 50 (DE)**

(54) **Steuerungssystem für eine Warmwasser-Heizungsanlage.**

(57) Der Heizungskreislauf (1) wird über die Vorlaufleitung (4) bei entsprechender Stellung des Umschaltventils (14) in der Rücklaufleitung (6) entweder vom Feststoff-Heizkessel (5) oder mittels des im Wärmespeicher (9) angeordneten Wärmetauschers (10) mit Heißwasser versorgt.

Zur Ausnutzung der Restwärme bleibt der Heizkessel (5) nach Abbrennen der Brennstoffbeladung zunächst zwischen der Rücklauf- und der Vorlaufleitung (6, 4) eingeschaltet. Erst wenn das Mischventil für längere Zeit den Weg von der Vorlaufleitung (4) zum Heizungskreislauf (1) vollständig öffnet, schaltet das Umschaltventil (14) um, so daß das aus dem Heizungskreislauf (1) in die Rücklaufleitung (6) fließende Wasser unter Umgehung des Heizkessels (5) durch den Wärmetauscher (10) strömt.

- 1 -

## Steuerungssystem für eine Warmwasser-Heizungsanlage

Die Erfindung betrifft ein Steuerungssystem für eine Warmwasser-Heizungsanlage mit einem Heizungskreislauf, der über ein darin angeordnetes Mischventil steuerbar mit der Heißwasservorlaufleitung eines Heizkessels, vorzugsweise eines Feststoff-Heizkessels, und über einen in Strömungsrichtung im Heizungskreislauf vor dem Mischventil angeordneten Abzweig mit der Rücklaufleitung des Heizkessels verbunden ist, sowie mit einem Wärmespeicher, welcher mittels Zu- und Ableitungen parallel zum Heizkessel zwischen der Vorlaufleitung und der Rücklaufleitung angeschlossen ist bzw. einen entsprechend angeschlossenen Wärmetauscher aufweist.

Derartige Anlagen sind aus der DE-OS 21 54 653 bekannt und werden bereits auf dem Markt angeboten. Dabei kann die Steuerung in der Weise erfolgen, daß entweder vom Heizkessel gelieferte Wärme oder aus dem Wärmespeicher entnommene Wärme dem Heizungskreislauf zugeführt wird.

Insbesondere Feststoffkessel, d.h. für Kohle oder ähnliche Brennstoffe vorgesehene Heizkessel, haben nach dem Abbrennen der jeweiligen Brennstoff-Füllung eine lange Nachwärmphase, während der im Feuerungsraum des Heizkessels noch vorhandene Glut noch erhebliche Wärmemengen abgibt. Außerdem besitzt der Heißwasserinhalt des Heizkessels nach dem Abbrennen der Brennstoff-Füllung einen erheblichen Wärmeinhalt.

Aufgabe der Erfindung ist es, ein Steuerungssystem zu schaffen, welches ein Ausnutzen der Restwärme des Heizkessels auch dann gestattet, wenn die Heizkesseltemperatur bereits unterhalb der Temperatur des Wärmespeichers ist, ohne daß dem Wärmespeicher gleichzeitig Wärme entzogen wird.

Diese Aufgabe wird dadurch gelöst, daß der zu- und abschaltbare Wärmespeicher bzw. sein Wärmetauscher unter gleichzeitiger Abkopplung des Heizkessels erst dann zwischen die Vorlaufleitung und die Rücklaufleitung einschaltbar sind, wenn das Mischventil seinen die Vorlaufleitung mit dem Heizungskreislauf verbindenden Weg praktisch voll geöffnet hat.

Dabei erfolgt die Zuschaltung des genannten Wärmespeichers bzw. seines Wärmetauschers vorzugsweise erst dann, wenn die voll geöffnete Stellung des Mischventils bereits während einer vorgebbaren Zeitspanne, beispielsweise 15 Minuten, bestanden hat.

Die Erfindung nutzt die Tatsache, daß die jeweilige Stellung des Mischventiles vom Wärmebedarf des Heizungskreislaufes abhängig ist. Eine vollständige Öffnung der Verbindung zwischen Vorlaufleitung und Heizungskreislauf zeigt an - zumindest wenn diese Offenstellung während längerer Zeit beibehalten wird - daß das von der Vorlaufleitung gelieferte Heißwasser nur eine unzureichende Wärmemenge mit sich führt. Dieser Fall kann bei richtiger Dimensionierung des Heizkessels nur auftreten, wenn die Brennstoff-Füllung bereits abgebrannt ist, d.h. der Heizkessel befindet sich in der Nachwärmphase.

Der Erfindung liegt somit der allgemeine Gedanke zugrunde, daß eine volle Öffnung der Verbindung zwischen Vorlaufleitung und Heizungskreislauf gleichbedeutend mit einer nicht mehr ausreichenden Wärmeentwicklung der jeweils benutzten Heizquelle ist und deshalb auf eine Wärmequelle mit größerer Belastbarkeit, etwa einen zuvor

- 3 -                                    0088358

aufgeladenen Wärmespeicher, umgeschaltet werden muß.

Zweckmäßigerweise können der Wärmespeicher bzw. sein
Wärmetauscher zur Wärmeentnahme nur bei oberhalb der
Kesseltemperatur liegender Speichertemperatur zugeschaltet werden, so daß nur bei hinreichend aufgeladenem Wärmespeicher aus demselben Wärme entnommen werden
kann.

Für den Fall, daß weder der Feststoffkessel noch der
Wärmespeicher eine hinreichende Wärmemenge liefern kann,
kann zum Feststoffkessel ein weiterer, für intermittierenden Betrieb geeigneter Heizkessel, wie Gas- oder Ölkessel,
parallelgeschaltet sein, welcher sich gegebenenfalls automatisch einschaltet und die Heizung des jeweiligen Gebäudes bzw. Gebäudeteiles sichert.

Der intermittierend arbeitende Heizkessel kann in üblicher Weise in Abhängigkeit vom Wärmebedarf gesteuert
werden, indem der zugehörige Brenner mehr oder weniger
häufig während kürzerer oder längerer Betriebsintervalle
automatisch eingeschaltet wird.

Der Feststoffkessel dagegen soll während des Abbrennens
der Brennstoff-Füllung möglichst bei optimaler, konstanter Leistung betrieben werden, wobei insbesondere ein
Schwelbrand und die dabei unvollkommene Verbrennung des
Brennstoffes vermieden werden sollen.Dies bedeutet, daß der
Feststoffkessel mit maximaler bzw. zumindest hoher Leistung arbeiten soll. Dies läßt sich aufgrund der Erfindung ohne Schwierigkeiten gewährleisten, auch dann, wenn
der Heizungskreislauf einen vergleichbar geringen Wärmebedarf hat. In diesem Fall ist vorgesehen, daß die vom
Heizungskreislauf nicht benötigte Wärmemenge dem Wärmespeicher zugeführt wird. Der dazu zwischen die Vorlaufleitung und die Rücklaufleitung geschaltete, im Wärmespeicher angeordnete gesonderte Wärmetauscher wird in Abhängigkeit von der Stellung des Mischventiles mit mehr oder weniger großen Heißwassermengen beliefert. Wenn beispielsweise das Mischventil die Verbindung zwischen Vorlaufleitung und Heizungskreislauf bei geringem oder keinem Wärmebedarf praktisch vollständig sperrt, wird das Heißwasser aus der Vorlaufleitung ausschließlich durch den gesonderten Wärmetauscher zur Rücklaufleitung geführt, so daß dem Wärmespeicher große Wärmemengen zugeführt werden. Bei Zwischenstellungen des Mischventiles wird das vom Heizkessel in die Vorlaufleitung strömende Heizwasser teilweise dem Heizungskreislauf und teilweise dem genannten gesonderten Wärmetauscher zugeführt.

Falls die ausschließlich durch Konvektion verursachten Strömungsgeschwindigkeiten des Heißwassers nicht ausreichen, kann in der Vorlaufleitung eine Vorlaufpumpe vorgesehen sein.

Gegebenenfalls können zwischen die Vorlauf- und die Rücklaufleitung ein einziger, im Wärmespeicher angeordneter Wärmetauscher bzw. entsprechende Zu- und Ableitungen des Wärmespeichers geschaltet sein und bei abgeschaltetem Kessel zur Wärmeentnahme aus dem Wärmespeicher und bei eingeschaltetem Kessel zur Wärmezufuhr in den Wärmetauscher dienen. In der Regel ist es jedoch zweckmäßig, zur Wärmezufuhr und zur Wärmeentnahme getrennte Leitungen bzw. Wärmetauscher vorzusehen, so daß dieselben unterschiedlich, für den jeweiligen Zweck optimiert, bemessen sein können.

Im letzteren Falle ist die Vorlaufpumpe zweckmäßierweise in Strömungsrichtung hinter dem Anschluß des zur Wärmeentnahme dienenden Wärmetauschers bzw. hinter dem entsprechenden Anschluß des Wärmespeichers und vor dem Anschluß des zur Wärmezuführung dienenden gesonderten Wärmetauschers in der Vorlaufleitung angeordnet.

Bei dieser Anordnung wird die Vorlaufpumpe eingeschaltet, einerseits wenn die Heizkesseltemperatur über der Speichertemperatur liegt und andererseits wenn der zur Wärmeentnahme dienende erste Wärmetauscher bzw. die entsprechenden Leitungen des Wärmespeichers unter Abschaltung des Heizkessels wirksam geschaltet sind. Wenn dagegen während der Nachwärmphase die Restwärme des Heizkessels ausgenutzt werden soll, ist die Vorlaufpumpe vorzugsweise abgeschaltet, um zu verhindern, daß das vom Heizkessel gelieferte Heißwasser, dessen Temperatur bereits unter der Speichertemperatur liegen kann, von der Vorlaufpumpe in den zur Wärmezufuhr dienenden gesonderten Wärmetauscher gefördert werden kann. Die Förderung des Heißwassers erfolgt in diesem Falle über eine im Heizungskreislauf vorgesehene Umwälzpumpe.

Eine konstruktiv besonders einfache Anordnung des Steuersystems ist gekennzeichnet durch eine Steuervorrichtung mit einer Temperatur-Vergleichsschaltung, welche eine erste Ausgangsleitung bei gegenüber der Speichertemperatur erhöhter Kesseltemperatur und eine zweite Ausgangsleitung bei gegenüber der Kesseltemperatur erhöhter Speichertemperatur einschaltet, und mit einer Schalteranordnung, deren auf seiner Eingangsseite mit dem Ausgang des Signalgebers verbundener einer Schalter bei vorhandenem Eingangssignal die Eingänge zweier weiterer, eingangsseitig parallelgeschalteter Schalter erregt, wobei der eine dieser weiteren Schalter bei Erregung die zweite Ausgangsleitung mit den Eingängen der beiden weiteren Schalter sowie einem Eingangsanschluß eines Umschaltventiles verbindet, welches bei Ansteuerung dieses Einganges den ersten Wärmetauscher bzw. die entsprechenden Leitungen des Wärmespeichers zur Wärmeentnahme einschaltet, und wobei der zweite weitere Schalter bei Erregung seines Einganges die Vorlaufpumpe mit einer unter Spannung stehenden Leitung verbindet, während die

0088358

Vorlaufpumpe bei nicht erregtem Eingang dieses Schalters mit der ersten Ausgangsleitung verbunden ist, welche ihrerseits mit dem anderen Eingangsanschluß des Umschaltventiles gekoppelt ist, welches bei Ansteuerung dieses Eingangsanschlusses den zur Wärmeentnahme dienenden gesonderten Wärmetauscher abschaltet.

Weitere Merkmale der Erfindung werden in der nachfolgenden Beschreibung anhand der Figuren erläutert. Dabei zeigen die

Fig. 1 bis 3   eine erste bevorzugte Ausführungsform der Erfindung in schematisierter Darstellung bei unterschiedlichen Betriebsphasen, wobei entweder die Wärmeenergie eines Feststoff-Heizkessels oder der Wärmeinhalt eines Wärmespeichers ausgenutzt werden, und

Fig. 4   eine abgewandelte Ausführungsform mit einem zusätzlich vorgesehenen Ölkessel, der parallel zum Feststoff-Heizkessels angeordnet ist.

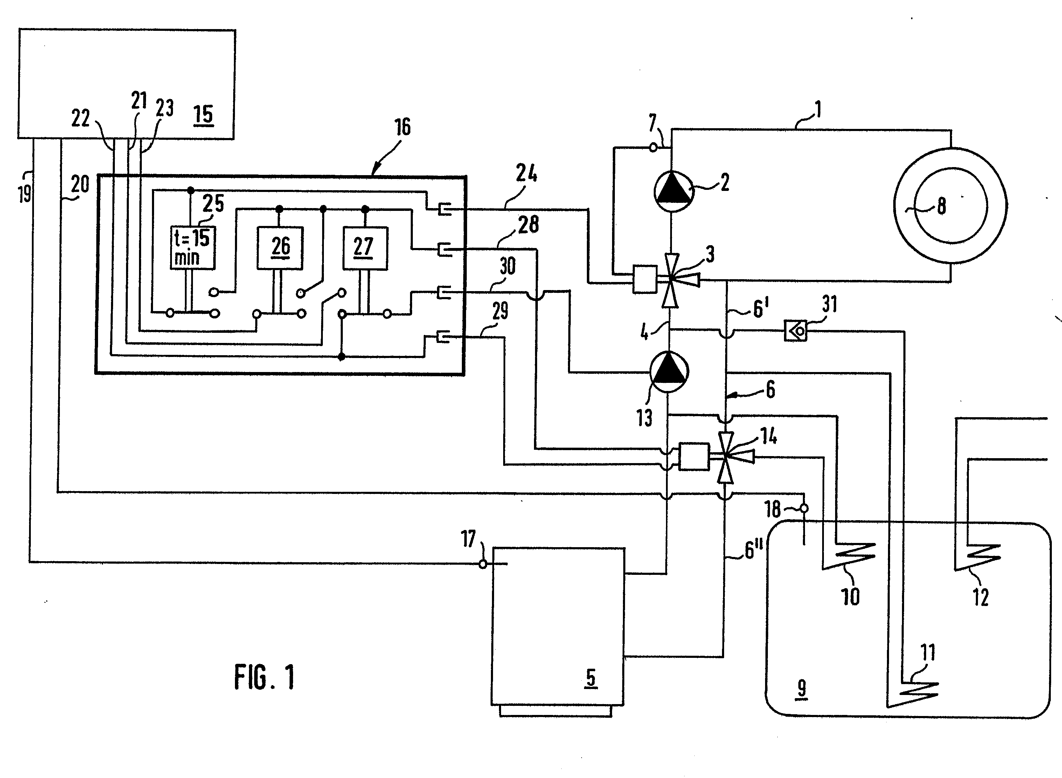

Das in den Fig. 1 bis 3 dargestellte Heizungssystem besitzt einen Heizungskreislauf 1 mit Umwälzpumpe 2 sowie einem motorisch verstellbaren Mischventil 3, welches den Heizungskreislauf 1 mit einer Vorlaufleitung 4 eines Feststoff-Heizkessels 5 steuerbar zu verbinden gestattet. In Strömungsrichtung vor dem Mischventil 3 ist der Heizungskreislauf 1 über einen Abzweig mit einer Rücklaufleitung 6 des Heizkessels 5 verbunden.

Das Mischventil 3 wird mittels eines Thermostaten 7 derart gesteuert, daß je nach Wärmebedarf mehr oder weniger Heißwasser aus der Vorlaufleitung 4 in den Heizungskreislauf 1 eingebracht wird, wobei zwangsläufig eine entsprechende Menge Wasser nach Durchlauf
durch die Heizungen 8 in die Rücklaufleitung 6 strömt.

Ein Wärmespeicher 9 besitzt einen zwischen die Vorlaufleitung 4 und die Rücklaufleitung 6 geschalteten Wärmetauscher 10 zur Wärmeentnahme aus dem Wärmespeicher 9
sowie einen weiteren, zwischen die Vorlaufleitung 4
und die Rücklaufleitung 6 geschalteten Wärmetauscher 11
zur Wärmezufuhr in den Speicher 9.

Außerdem kann noch ein zusätzlicher Wärmetauscher 12
vorgesehen sein, der aus dem Wärmespeicher 9 Wärme zur
Erzeugung von warmem Brauchwasser entnimmt.

Zwischen der Verbindung der Vorlaufleitung 4 mit dem
Wärmetauscher 10 und der entsprechenden Verbindung mit
dem Wärmetauscher 11 ist in der Vorlaufleitung 4 eine
Vorlaufpumpe 13 angeordnet, welche im eingeschalteten
Zustand vom Heizkessel 5 über die Vorlaufleitung 4 geliefertes Heißwasser dem Mischventil 3 zur Beimischung
in den Heizungskreislauf 1 zuführt und außerdem Heißwasser, soweit dieses nicht vom Heizungskreislauf 1
aufgenommen wird, zum Wärmetauscher 11 fördert, von wo
es nach entsprechender Erwärmung des Wärmespeichers 9
zur Rücklaufleitung 6 fließt.

Zur Verbindung des Wärmetauschers 10 mit der Rücklaufleitung 6 dient ein Umschaltventil 14, welches in seiner einen Stellung die Leitungsteile 6' und 6" der
Rücklaufleitung unter Abkopplung des Wärmetauschers 10
miteinander verbindet und, während in der anderen Stellung des Umschaltventiles 14 der Leitungsteil 6' der
Rücklaufleitung mit dem Wärmetauscher 10 gekoppelt ist, so daß das den Wärmetauscher 10 durchfließende
Wasser unter Umgehung des Heizkessels 5 der Vorlaufleitung 4 zugeführt wird.

Die Vorlaufpumpe 13 sowie das Umschaltventil 14
werden in Abhängigkeit von der Stellung des Mischventiles 3 sowie der Speicher- und Heizkesseltemperatur
gesteuert. Dazu dienen eine Temperatur-Vergleichsschaltung 15 sowie eine Schalteranordnung 16.

Die Temperatur-Vergleichsschaltung 15 besitzt zwei
mit Temperaturfühlern 17 und 18 für den Heizkessel 5
bzw. den Wärmespeicher 9 verbundene Eingänge 19 und
20. Neben einem dauernd auf einem elektrischen Potential H liegenden Anschluß 21 besitzt die Temperatur-
Vergleichsschaltung 15 zwei Ausgänge 22 und 23, von
denen jeweils nur einer mit einem elektrischen Potential H verbunden wird, während der andere abgeschaltet
ist. Dabei wird der Ausgang 22 unter Spannung gelegt,
wenn die Temperatur im Heizkessel 5 oberhalb der Temperatur im Wärmespeicher 9 liegt, während der andere
Ausgang 23 unter Spannung steht, wenn die Temperatur
im Wärmespeicher 9 die Temperatur im Heizkessel 5 übersteigt.

Die Schalteranordnung 16 ist eingangsseitig über eine
Eingangsleitung 24 mit einem am Mischventil 3 angeordneten Signalgeber verbunden, der die Eingangsleitung 4
auf ein elektrisches Potential H legt, wenn das Mischventil 3 seine eine Endstellung erreicht, bei der die
Verbindung zwischen Vorlaufleitung 4 und Heizungskreislauf 1 maximal geöffnet ist. In der Schalteranordnung
sind Schalter 25 bis 27 angeordnet. Der Schalter 25 ist
eingangsseitig mit der Eingangsleitung 24 verbunden und so ausgebildet, daß er bei Erregung seines Einganges, d.h. die Eingangsleitung 24 führt ein elektrisches Potential H, mit einer Zeitverzögerung von beispielsweise 15 Minuten, die Eingänge der eingangsseitig parallelgeschalteten Schalter 26 und 27 mit der Eingangsleitung 24 verbindet.

Die Schalter 26 und 27 sind eingangsseitig außerdem mit einer Ausgangsleitung 28 verbunden, die ihrerseits an einem Eingang des Umschaltventiles 14 angeschlossen ist, derart, daß das Umschaltventil 14 den Leitungsteil 6' der Rücklaufleitung 6 mit dem Wärmetauscher 10 verbindet, wenn die Ausgangsleitung 28 auf einem elektrischen Potential H liegt.

Der Schalter 26 verbindet bei Erregung seines Einganges den Ausgang 23 der Temperatur-Vergleichsschaltung 15 mit der Eingangsseite der Schalter 26 und 27 und somit mit der Ausgangsleitung 28.

Eine weitere Ausgangsleitung 29 der Schalteranordnung 16 ist mit dem anderen Eingang des Umschaltventiles 14 verbunden, welches bei Erregung dieses Einganges, d.h. die Ausgangsleitung 29 liegt an einem elektrischen Potential H, den Leitungsteil 6' mit dem Leitungsteil 6" der Rücklaufleitung 6 unter Abkopplung des Wärmetauschers 10 von der Rücklaufleitung 6 verbindet. Die Ausgangsleitung 29 ist innerhalb der Schalteranordnung 16 dauernd mit dem Ausgang 22 der Temperatur-Vergleichsschaltung 15 verbunden.

Bei nicht erregtem Schalter 27 wird dieser Ausgang 22 außerdem mit einer mit der Vorlaufleitung 13 verbundenen Ausgangsleitung 30 der Schalteranordnung 16 dergestalt verbunden, daß die Vorlaufpumpe 13 eingeschaltet ist, wenn die Ausgangsleitung 30 ein elektrisches Potential H führt. Wird der Schalter 27 erregt, so verbindet er den Anschluß 21 mit der Ausgangsleitung 30.

Die Steuerung der dargestellten Heizungsanlage arbeitet in der folgenden Weise:

Zunächst wird angenommen, daß der Heizkessel 5 in Betrieb ist und eine oberhalb der Temperatur des Wärmespeichers 9 liegende Heizkessel-Temperatur aufweist. In diesem Falle nehmen die Schalter 25 bis 26 ihre in Fig. 1 dargestellten Lagen ein, gleichzeitig ist der Ausgang 22 der Temperatur-Vergleichsschaltung 15 an ein elektrisches Potential H angeschlossen, während der Ausgang 23 spannungslos ist. Dementsprechend liegen die Ausgangsleitungen 29 und 30 der Schalteranordnung 16 auf einem Potential H, d.h. die Vorlaufpumpe 13 ist eingeschaltet, und das Umschaltventil 14 nimmt seine die Leitungsteile 6' und 6" der Rücklaufleitung 6 verbindende Stellung ein. Das vom Heizkessel 5 erzeugte Heißwasser wird von der Vorlaufpumpe 13 dem Mischventil 3 zugeführt bzw., soweit das Heißwasser nicht in den Heizungs-Kreislauf 1 eingebracht wird, in den Wärmetauscher 11 zur Aufheizung des Wärmespeichers 9 gefördert.

Sobald die Brennstoff-Füllung des Heizkessels 5 mehr oder weniger abgebrannt ist, sinkt die Heizkessel-Temperatur langsam unter die Temperatur des Wärmespeichers 9 ab, so daß die Temperatur-Vergleichsschaltung 15 den Ausgang 22 vom Potential H abkoppelt und stattdessen den Ausgang 23 auf dieses Potential legt. Dabei behalten die Schalter 25 bis 27 zunächst die in Fig. 1 dargestellte Lage bei, so daß keine der Ausgangsleitungen 28 bis 30 der Schalteranordnung 16 unter Spannung steht. Somit ist die Vorlaufpumpe 13 ausgeschaltet, das Umschaltventil 14 behält seine zuvor eingenommene Lage - die Leitungsteile 6' und 6" der Rücklaufleitung 6 verbindende - Lage bei. Je nach Stellung des Mischventiles 3 kann die Umwälzpumpe 2 mehr oder weniger vom Heizkessel 5 über die Vorlaufleitung 4 noch geliefertes Heißwasser, dessen Temperatur nunmehr langsam absinkt, in den Heizungskreislauf 1 einsaugen. Somit kann die in der Regel erhebliche Restwärme des Heizkessels 5 nach Abbrennen der Brennstoff-Füllung ausgenutzt werden.

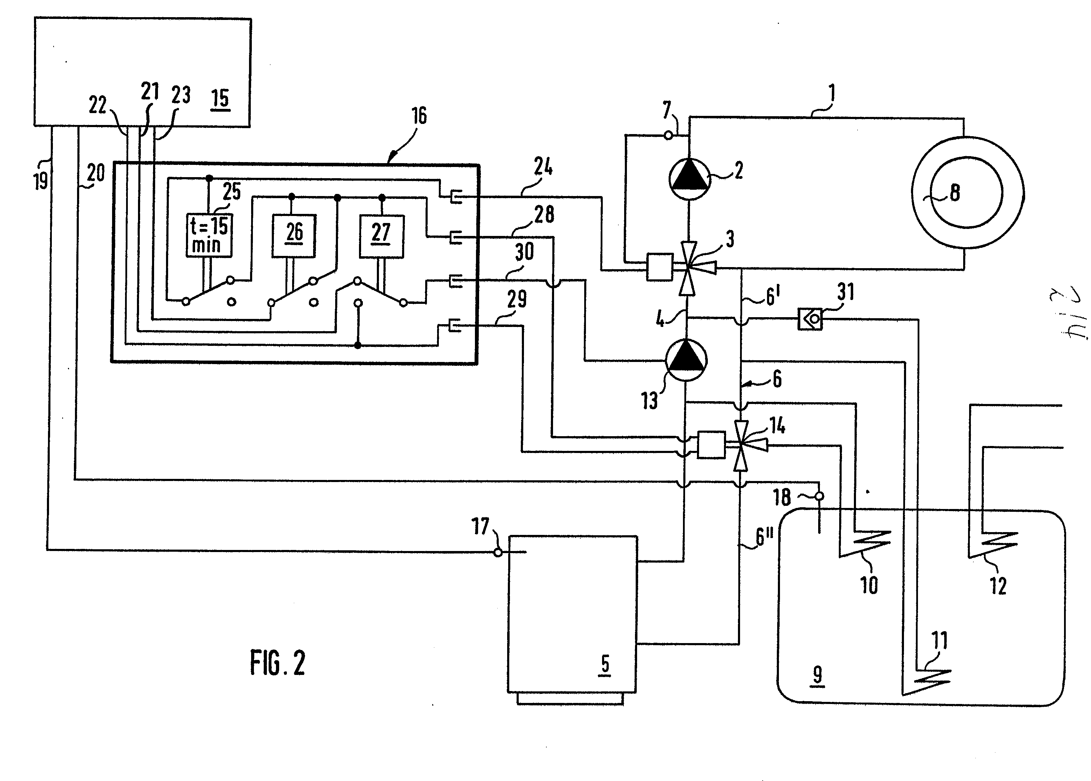

Sobald die Restwärme des Heizkessels 5 den Wärmebedarf des Heizungskreislaufes 1 nicht mehr decken kann, nimmt das Mischventil 3 dauernd seine eine Endlage ein, bei der die Verbindung zwischen Vorlaufleitung 4 und Heizungskreislauf 1 maximal geöffnet ist, so daß die Eingangsleitung 24 von dem mit dem Mischventil 3 gekoppelten Signalgeber auf ein elektrisches Potential H gelegt wird. Damit schaltet der Schalter 25 nach ca. 15 Minuten in seine in Fig. 2 dargestellte Lage um, so daß die Eingangsseiten der Schalter 26 und 27 entsprechend der Eingangsleitung 24 ein elektrisches Potential H führen und die Schalter 26 und 27 ebenfalls in die in Fig. 2 dargestellten Lagen umschalten. Dadurch wird die Ausgangsleitung 28 der Schalteranordnung 26 mit dem Ausgang 23 der Temperatur-Vergleichsschaltung 15 verbunden, welcher, da die Kesseltemperatur unter der Speichertemperatur liegt, ein Potential H führt. Somit wird das Umschaltventil 14 über die Ausgangsleitung 28 derart umgesteuert, daß der Leitungsteil 6' der Rücklaufleitung 6 mit dem Wärmetauscher 10 verbunden wird. Gleichzeitig schaltet sich die Vorlaufpumpe 13 wiederum ein, da die Ausgangsleitung 30 der Schalteranordnung 16 nunmehr mit dem dauernd das Potential H führenden Anschluß 21 vermittels des Schalters 27 verbunden ist.

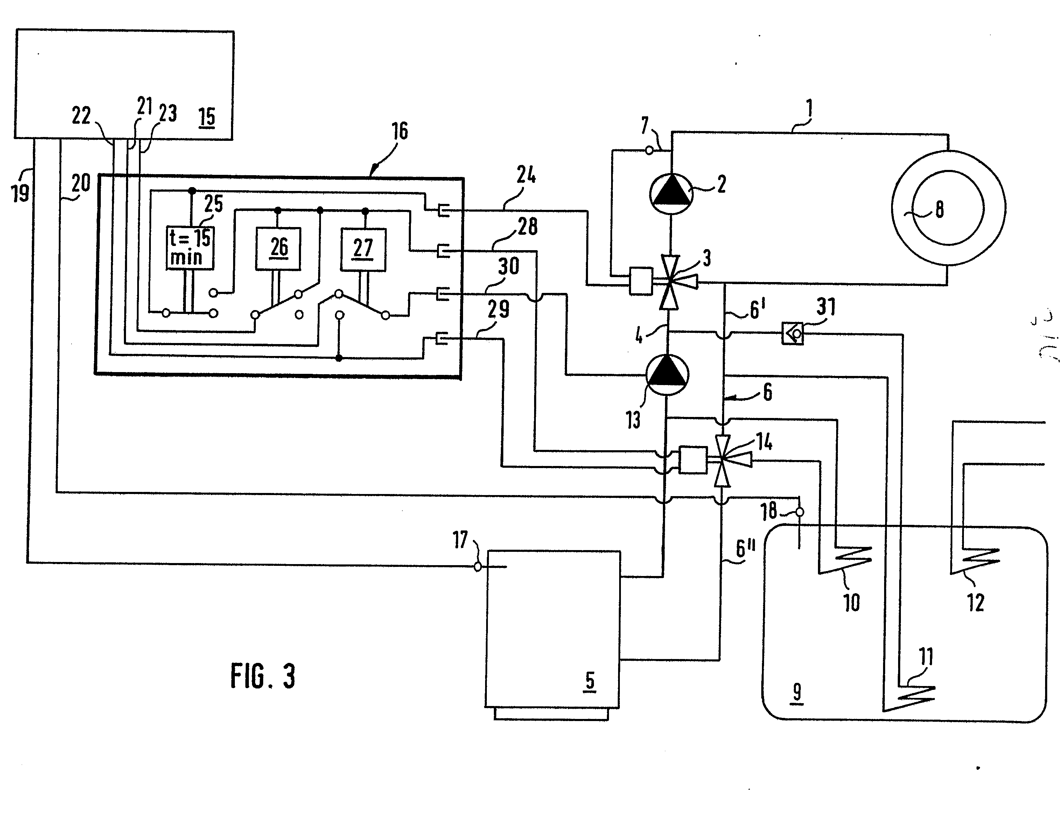

Somit wird nunmehr aus dem Speicher 9 über den Wärmetauscher 10 Wärme entnommen, d.h. anstelle des Heizkessels 5 erzeugt nunmehr der Wärmetauscher 10 Heißwasser, welches von der Vorlaufpumpe 13 zum Mischventil 3 gefördert wird. Falls der Wärmeinhalt des zum Mischventil 3 geförderten Heißwassers größer ist als der Wärmebedarf des Heizungskreislaufes 1, schließt das Mischventil 3 die Verbindung zwischen Vorlaufleitung 4 und Heizungskreislauf 1 wiederum teilweise, so daß der mit dem Mischventil 3 gekoppelte Signalgeber die Eingangsleitung 24 wiederum vom Potential H abkoppelt, so daß der Schalter 25 in seine in Fig. 3 dargestellte Lage abfällt. Die Schalter 25 und 26 behalten jedoch ihre Stellung bei, da die Eingänge dieser Schalter aufgrund der Stellung des Schalters 26 an den unter Spannung stehenden Ausgang 23 der Temperatur-Vergleichsschaltung 15 gekoppelt sind.

Sobald der Wärmeinhalt des Wärmespeichers 9 aufgebraucht ist, muß wiederum der Heizkessel 5 in Betrieb gesetzt werden, d.h. mit einer neuen Brennstoff-Füllung beladen werden. Dabei steigt wiederum die Kesseltemperatur über die Temperatur des Wärmespeichers 9 an, so daß wiederum der Ausgang 22 der Temperatur-Vergleichsschaltung 15 unter Spannung gesetzt wird, während der Ausgang 23 abgeschaltet wird und die Schalter 25 bis 27 wiederum ihre in Fig. 1 dargestellte Lage einnehmen. Dies ist gleichbedeutend damit, daß wiederum der bereits beschriebene Betriebsablauf erneut durchlaufen wird.

Gemäß einer bevorzugten Ausführungsform der Erfindung kann in der Verbindungsleitung zwischen dem Wärmetauscher 11 und der Vorlaufleitung 4 ein Rückschlagventil 31 angeordnet sein, welches nur eine Strömung in Richtung des Wärmetauschers 11 zuläßt, so daß bei ausgeschalteter Vorlaufpumpe 13, eingeschalteter Umwälzpumpe 2 und geöffneter Verbindung zwischen Vorlaufleitung 4 und Heizungskreislauf 1 über den Wärmetauscher 11 keinerlei Wärme aus dem Wärmespeicher 9 entnommen werden kann. In der Regel wird jedoch eine entsprechende Strömung bereits durch den hohen Drosselwiderstand des Wärmetauschers 11 verhindert, so daß unter Umständen auf das Rückschlagventil 31 auch verzichtet werden kann.

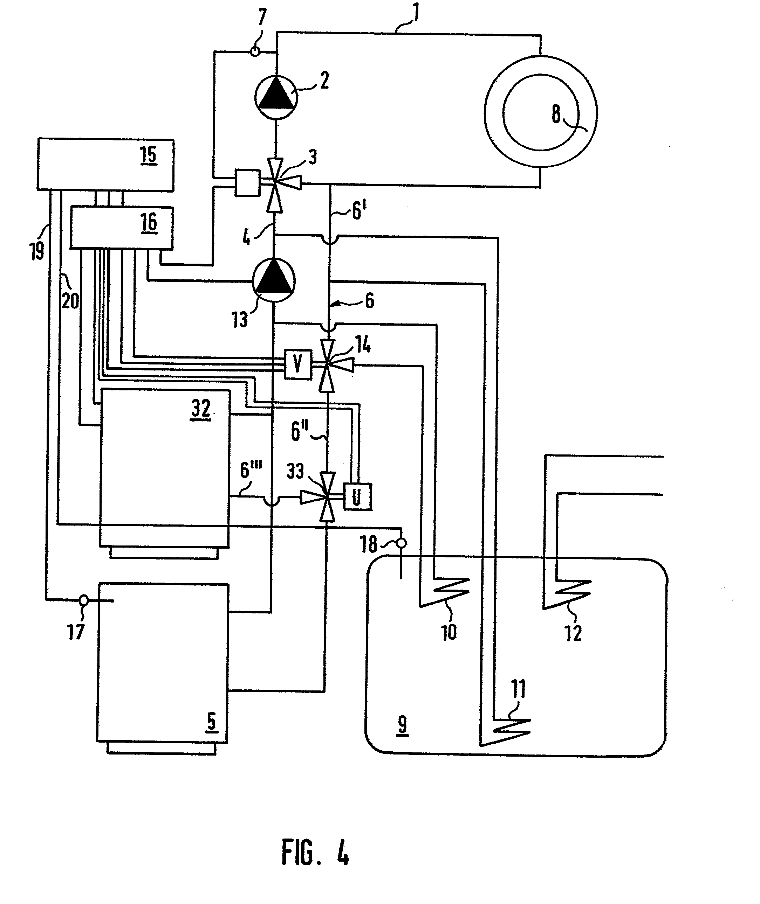

Gemäß einer weiteren bevorzugten Ausführungsform der Erfindung ist, wie in Fig. 4 dargestellt ist, parallel zum Feststoff-Heizkessel 5 ein Öl- oder Gaskessel 32 angeordnet, welcher sich automatisch einschaltet, wenn der Wärmeinhalt des Wärmespeichers 9 nach Abkühlung des Feststoff-Heizkessels 5 aufgebraucht worden ist. Gleichzeitig mit dem Einschalten des Öl- oder Gaskessels 32 werden das Umschaltventil 14 sowie ein weiteres Umschaltventil 33 in eine solche Stellung gebracht, daß der Leitungsteil 6' der Rücklaufleitung 6 mit deren Leitungsteil 6" und dem daran anschließenden Leitungsteil 6"' verbunden ist.

Der besondere Vorteil der Erfindung liegt darin, daß das von den Heizkesseln 5 bzw. 32 erzeugte Heißwasser gegebenenfalls sofort zur Aufheizung des Heizungskreislaufes 1 herangezogen werden kann und nicht zunächst der Wärmespeicher 9 aufgeheizt werden muß. Außerdem kann der Feststoffkessel 5 während des Abbrandes seiner Brennstoff-Füllung dauernd optimal eingestellt werden, wobei hohe Wärmemengen ohne Schwelbrand erzeugt werden. Gegebenenfalls vom Heizungskreislauf 1 nicht benötigte überschüssige Wärme wird im Wärmespeicher 9 gespeichert. Darüber hinaus wird die erhebliche Restwärme des Feststoffkessels 5 nach Abbrand der Brennstoff-Füllung ausgenutzt. Im übrigen erfolgt die Steuerung in der Weise, daß das in den Leitungsteil 6' der Rücklaufleitung einfließende abgekühlte Wasser entweder dem Wärmetauscher 10 oder dem Heizkessel 5 - gegebenenfalls auch dem Heizkessel 32 - zugeführt wird, so daß der Wärmeinhalt des Wärmespeichers 9 unter keinen Umständen zur unerwünschten Erwärmung des gegebenenfalls abgekühlten Heizkessels 5 bzw. 32 dienen kann.

Der Betriebsablauf bei Benutzung des Öl- oder Gaskessels 32 kann gegebenenfalls in der gleichen Weise erfolgen, wie oben für den Betrieb des Feststoff-Heizkessels 5 dargelegt wurde. Jedoch ist bei Öl- oder Gaskesseln ein intermittierender Betrieb ohne weiteres möglich, so daß gegebenenfalls eine herkömmliche Regelung der Wärmeleistung durch mehr oder weniger häufiges Einschalten des Öl- oder Gaskessels 32 vorgenommen werden kann.

Die Erfindung ist nicht auf die dargestellten Ausführungsbeispiele beschränkt. Anstelle der zwischen die Vorlaufleitung 4 und die Rücklaufleitung 6 geschalteten Wärmetauscher 10 und 11 zur Wärmezufuhr in den Wärmespeicher 9 bzw. zur Wärmeentnahme aus dem Wärmespeicher 9 kann ein als Wärmereservoir dienender, wärmeisolierter druckfester Wasserspeicher direkt mit einem Anschluß mit der Vorlaufleitung 4 und mit einem weiteren Anschluß mit der Rücklaufleitung 6 verbunden sein. An zumindest einem Anschluß ist eine Umschaltventilanordnung angeordnet, welche zwei Durchlaßstellungen mit unterschiedlichen Flußrichtungen einzustellen gestattet, so daß entweder - zur Wärmespeicherung - Heißwasser aus der Vorlaufleitung in den Wasserbehälter oder - zur Wärmeentnahme - warmes bzw. heißes Wasser aus dem Wasserbehälter in die Vorlaufleitung eingeführt werden kann.

Im übrigen erfolgt die Steuerung der Umschaltventilanordnung in der Weise, daß nur bei oberhalb der Temperatur des Wasserbehälters liegender Kesseltemperatur - d.h. bei Betrieb des Heizkessels 5 - Heißwasser aus der Vorlaufleitung 4 in den Wasserbehälter gelangen kann, während das im Wasserbehälter zuvor gespeicherte Heißwasser nach zunehmender Abkühlung des Heizkessels während der Nachwärmphase erst dann unter gleichzeitiger Abkopplung des Heizkessels 5 in die Vorlaufleitung 4 einfließen kann, wenn das Mischventil 3 seinen die Vorlaufleitung 4 mit dem Heizungskreislauf 1 verbindenden Weg unter Betätigung des zugehörigen Signalgebers vollständig geöffnet hat. Während der Ausnutzung der Restwärme des Heizkessels 5 im Verlauf der Nachwärmphase bleibt der Wasserbehälter von der Vorlauf- bzw. Rücklaufleitung 4 bzw. 6 abgekoppelt.

Patentansprüche

1. Steuerungssystem für eine Warmwasser-Heizungsanlage mit einem Heizungskreislauf, der über ein darin angeordnetes Mischventil steuerbar mit der Heißwasservorlaufleitung eines Heizkessels, vorzugsweise eines Feststoff-Heizkessels, und über einen in Strömungsrichtung im Heizungskreislauf vor dem Mischventil angeordneten Abzweig mit der Rücklaufleitung des Heizkessels verbunden ist, sowie mit einem Wärmespeicher, welcher mittels Zu- und Ableitungen parallel zum Heizkessel zwischen der Vorlaufleitung und der Rücklaufleitung angeschlossen ist bzw. - vorzugsweise - einen entsprechend angeschlossenen Wärmetauscher aufweist, dadurch gekennzeichnet, daß der zu- und abschaltbare Wärmespeicher (9) bzw. sein Wärmetauscher (10) unter gleichzeitiger Abkopplung des Heizkessels (5,32) erst dann einschaltbar ist, wenn das Mischventil (3) seinen die Vorlaufleitung (4) mit dem Heizungskreislauf (1) verbindenden Weg voll geöffnet hat.

2. Steuerungssystem nach Anspruch 1, dadurch gekennzeichnet, daß das Einschalten des Wärmespeichers (9) bzw. seines Wärmetauschers (10) erst dann erfolgt, wenn die voll geöffnete Stellung des Mischventiles (3) während einer vorgebbaren Zeitspanne - beispielsweise 15 Minuten - bestanden hat.

3. Steuerungssystem nach einem der Ansprüche 1 und 2, dadurch gekennzeichnet, daß der Wärmespeicher (9) bzw. sein Wärmetauscher (10) mittels eines durch Ausgangssignale eines Steuersystems (15,16) gesteuerten Umschaltventiles (14) ein- bzw. abschaltbar sind.

4. Steuerungssystem nach einem der Ansprüche 1 bis 3, dadurch gekennzeichnet, daß der Wärmespeicher (9) bzw. sein Wärmetauscher (10) nur zuschaltbar sind, wenn die Temperatur des Wärmespeichers (9) größer als die Temperatur des Heizkessels (5,32) ist.

5. Steuerungssystem nach einem der Ansprüche 1 bis 4, dadurch gekennzeichnet, daß zum Heizkessel (5) ein weiterer für intermittierenden Betrieb geeigneter Heizkessel (32), wie Gas- oder Ölkessel, zu- und abschaltbar parallelgeschaltet ist.

6. Steuerungssystem nach einem der Ansprüche 1 bis 5, dadurch gekennzeichnet, daß zwischen Vorlauf- und Rücklaufleitung (4,6) ein gesonderter Wärmetauscher (11) im Wärmespeicher (9) angeordnet ist, der bei zugeschaltetem Kessel (5,32) zur Wärmezuführung in den Wärmespeicher (9) dient.

7. Steuerungssystem nach einem der Ansprüche 1 bis 6, dadurch gekennzeichnet, daß in der Vorlaufleitung (4) in Strömungsrichtung vor dem Anschluß zum gesonderten Wärmetauscher (11) eine Vorlaufpumpe (13) angeordnet ist.

8. Steuerungssystem nach einem der Ansprüche 1 bis 7, dadurch gekennzeichnet, daß in der Leitung zum gesonderten Wärmetauscher (11) eine Rückschlagsicherung (Rückschlagventil 31) vorgesehen ist, welche nur eine Strömung von der Vorlaufleitung (4) in den gesonderten Wärmetauscher (11) zuläßt.

9. Steuerungssystem nach einem der Ansprüche 1 bis 8, dadurch gekennzeichnet, daß die Vorlaufpumpe (13) hinter dem Anschluß zum ersten Wärmetauscher (10) bzw. hinter der Zuleitung des Wärmespeichers (9) angeordnet ist.

10. Steuerungssystem nach einem der Ansprüche 7 bis 9, dadurch gekennzeichnet, daß die Vorlaufpumpe (13) eingeschaltet ist, wenn die Temperatur im Heizkessel (5,32) über der Temperatur im Wärmespeicher (9) liegt, wobei gleichzeitig der erste Wärmetauscher (10) bzw. die entsprechenden Zu- und Ableitungen des Wärmespeichers (9) unwirksam geschaltet sind.

11. Steuerungssystem nach einem der Ansprüche 7 bis 10, dadurch gekennzeichnet, daß die Vorlaufpumpe (13) eingeschaltet ist, wenn die Temperatur im Wärmespeicher (9) über der Temperatur im Heizkessel (5,32) liegt und wenn gleichzeitig der erste Wärmetauscher (10) bzw. die Zu- und Ableitungen des Wärmespeichers (9) eingeschaltet sind.

12. Steuerungssystem nach einem der Ansprüche 1 bis 11, gekennzeichnet durch ein Steuersystem (15,16) mit einer Temperatur-Vergleichsschaltung (15), welche einen ersten Ausgang (22) bei gegenüber der Speichertemperatur erhöhter Kesseltemperatur und einen zweiten Ausgang (23) bei gegenüber der Kesseltemperatur erhöhter Speichertemperatur einschaltet, und mit einer Schalteranordnung (16), deren an seinem Eingang mit dem Ausgang des Signalgebers (am Mischventil 3) verbundener einer Schalter (25) bei vorhandenem Eingangssignal die Eingänge zweier weiterer, eingangsseitig parallelgeschalteter Schalter (26,27) erregt, wobei der erste dieser weiteren Schalter (26,27) bei Erregung den zweiten Ausgang (23) der Temperatur-Vergleichsschaltung (15) mit den Eingängen der beiden weiteren Schalter (26,27) sowie mit einem Eingangsanschluß des Umschaltventiles (14) verbindet, welches bei Ansteuerung dieses Einganges den ersten Wärmetauscher (10) bzw. die entsprechenden Zu- und Ableitungen des Wärmespeichers (9) einschaltet, und wobei der zweite weitere Schalter (27) bei Erregung seines Einganges die Vorlaufpumpe (13) mit einer unter Spannung stehenden Leitung (21) verbindet, während die Vorlaufpumpe bei nicht erregtem Eingang dieses zweiten weiteren Schalters (27) mit dem ersten Ausgang (22) der Temperatur-Vergleichsschaltung (15)

0088358

verbunden ist, welcher seinerseits mit dem anderen Eingangsanschluß des Umschaltventiles (14) gekoppelt ist, welches bei Ansteuerung dieses Einganges den ersten Wärmetauscher (10) bzw. die entsprechenden Zu- und Ableitungen des Wärmespeichers (9) abschaltet.

13. Steuerungssystem nach Anspruch 12, dadurch gekennzeichnet, daß der erste Schalter (25) der Schalteranordnung (16) bei Erregung seines Einganges die weiteren Schalter (26,27) mit Zeitverzögerung erregt.

FIG. 1

FIG. 2

0088358

Mö 21

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 757 934 (BROCKERHOFF) <br> * Seite 6, Zeilen 27-34; Seite 8, Zeile 24 - Seite 9, Zeile 2 * | 1 | F 24 D 11/00 <br> F 24 D 19/10 |
| A | | 2,3,13 | |
| Y | CH-A- 342 354 (BROSENIUS) <br> * Seite 4, Spalte 2, Zeile 103 - Seite 5, Spalte 1, Zeile 2; Seite 4, Spalte 2, Zeilen 61-72 * | 1 | |
| A | | 4,6,10 ,11 | |
| A | DE-A-2 256 769 (VAILLANT) <br> * Seite 4, Zeilen 20-22 * | 2,13 | RECHERCHIERTE SACHGEBIETE (Int. Cl. ³) |
| A | FR-A-2 452 675 (EIDENSCHENK) <br> * Seite 3, Zeilen 2-10, 21-22; Figur 1 * | 5,8 | F 24 D |
| A | FR-A-2 082 858 (THIVOLET) <br> * Seite 4, Zeilen 11-22; Figur 2 * | 6 | |
| A | DE-A-2 638 354 (INTERLITZ) | 6 | |

Der vorliegende Recherchenbericht wurde für alle Patentansprüche erstellt.

| Recherchenort <br> DEN HAAG | Abschlußdatum der Recherche <br> 25-05-1983 | Prüfer <br> COMEL E. |
|---|---|---|